# EUROPÄISCHE PATENTANMELDUNG

(11) **EP 4 721 880 A2**
(43) Veröffentlichungstag der Anmeldung: **08.04.2026**
(21) Anmeldenummer: 26159064.0
(22) Anmeldetag: 31.03.2023
(51) Int. Cl.: B06B 1/02

(54) **VORRICHTUNG ZUR ANSTEUERUNG EINES ULTRASCHALL-TRANSDUCERS UND ULTRASCHALL-MESSVORRICHTUNG MIT EINER DERARTIGEN ANSTEUERVORRICHTUNG FÜR DEN ULTRASCHALL-TRANSDUCER**

(30) Priorität: 08.04.2022 EP 22167318
(62) Teilanmeldung aus: 23165909.5
(71) Anmelder: Elmos Semiconductor SE, 51379 Leverkusen (DE)
(72) Erfinder: Schmidt, Andre, 51674 Wiehl (DE); Kreiß, Dennis, 30559 Hannover (DE); Schlautmann, Guido, 48341 Altenberge (DE); Heppekausen, Stefanie, 45239 Essen (DE)
(74) Vertreter: dompatent

(57) **Zusammenfassung**

Vorrichtung zur Ansteuerung eines Ultraschall-Transducers und zur Auswertung von von dem Ultraschall-Transducer gelieferten Messsignalen, mit
- einer integrierten Schaltung (12), die zwei nach außen geführte IC-Anschlüsse (16) zur elektrischen Verbindung mit einem Ultraschall-Transducer (10) aufweist,
- wobei an die IC-Anschlüsse (16) der integrierten Schaltung (12) zum Aussenden eines Ultraschall-Burstsignals in einer Ansteuerphase eine alternierend umpolbare Ansteuerspannung angelegt wird und an den IC-Anschlüssen (16) der integrierten Schaltung (12) bei Empfang eines Ultraschall-Echosignals in einer Empfangsphase eine von dem Ultraschall-Transducer ausgegebene Auswertespannung anliegt,
- wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
- einer als Bestandteil der integrierten Schaltung (12) ausgebildeten Ansteuereinheit (23) zur Erzeugung der Ansteuerspannung, wobei die Ansteuereinheit (23) mit einer zwischen einem Versorgungspotential (VDD) und einem Bezugspotential (44), insbesondere Masse, angeordneten Vollbrückenschaltung (24) mit zwei jeweils zwei Ansteuer-Halbleiterschalter (28) aufweisende Halbbrückenschaltungen (26) versehen ist, deren beide jeweils zwei Ansteuer-Halbleiterschalter (28) verbindende Schaltungsknoten (32) mit den beiden IC-Anschlüssen (16) der integrierten Schaltung (12) elektrisch verbunden sind,
- einer als Bestandteil der integrierten Schaltung (12) ausgebildeten Auswerteeinheit (49) mit einem Auswertespannungen in dem Niedervoltbereich verarbeitenden Verstärker (50) mit zwei Eingangsanschlüssen (52, 54), die mit den beiden IC-Anschlüssen (16) der integrierten Schaltung (12) elektrisch verbunden sind,
- einem als Bestandteil der integrierten Schaltung (12) ausgebildeten Spannungsbegrenzungselement (56) in jeder elektrischen Verbindung (46', 48') zwischen den Eingangsanschlüssen (52, 54) des Verstärkers (50) und den beiden IC-Anschlüssen (16) der integrierten Schaltung (12), wobei beide Spannungsbegrenzungselemente (56) die an den Eingangsanschlüssen (52, 54) des Verstärkers (50) anliegende Spannung auf einen Wert in dem Niedervoltbereich begrenzen,
- einer als Bestandteil der integrierten Schaltung (12) ausgebildeten Steuereinheit (30) zur Ansteuerung der Ansteuer- Halbleiterschalter (28),
- wobei zum Anlegen der Steuerspannung an die IC-Anschlüsse (16) der integrierten Schaltung von den vier Ansteuer-Halbleiterschaltern (28) wechselweise jeweils zwei Ansteuer-Halbleiterschalter (28) eingeschaltet sowie jeweils zwei Ansteuer-Halbleiterschalter (28) ausgeschaltet sind und
- wobei zum Auswerten einer an den IC-Anschlüssen (16) der integrierten Schaltung (12) anliegenden Auswertespannung die vier Ansteuer-Halbleiterschalter (28) ausgeschaltet sind.

## Beschreibung

Die Erfindung betrifft eine Vorrichtung zur Ansteuerung eines Ultraschall-Transducers und zur Auswertung von von dem Ultraschall-Transducer gelieferten Messignalen und eine Ultraschall-Messvorrichtung mit einer derartigen Ansteuer- und Auswertevorrichtung insbesondere für den Einsatz als Abstandsmessung bei Fahrzeugen und insbesondere als Fahrzeug-Einparkhilfe.

Ultraschall-Messsysteme werden insbesondere für die Abstands- bzw. Entfernungsmessung eingesetzt. Ein wesentlicher Einsatzbereich solcher Ultraschall-Messsysteme ist ihre Verwendung als Parkhilfe für Fahrzeuge. Ultraschall-Messsysteme werden aber auch zur Überwachung von Räumen und zur Detektion von sich in überwachten Räumen aufhaltenden Personen eingesetzt.

Ganz allgemein gilt für Ultraschall-Messsysteme, dass von einem Ultraschallsender Ultraschallwellen ausgesendet werden und, wenn sie auf ein Hindernis auftreffen, von diesem reflektiert sowie von einem Ultraschallempfänger empfangen werden. Anhand der Laufzeit zwischen dem Aussenden von Ultraschallwellen und dem Empfang von Echos der ausgesendeten Ultraschallwellen kann auf die Entfernung des Hindernisses zum Ultraschallsender bzw. -empfänger geschlossen werden.

Um auch noch Echosignale, die von weiter entfernten Objekten herrühren, zuverlässig detektieren zu können, sollte die Energie der ausgesendeten Ultraschallwellen ausreichend groß sein. Daher werden elektroakustische Ultraschallwandler derartiger Ultraschall-Messsysteme am Eingang mit einem Transformator bzw. Spannungsumsetzer betrieben. Ein derartiges Bauteil aber steigert die Herstellungskosten, was sich insbesondere bei Parkhilfen für Fahrzeuge insoweit negativ auswirkt, als derartige Parkhilfen zumeist mehrere Ultraschallwandler umfassen.

Ein Ultraschallmesssystem kann, wie zuvor beschrieben, einen Ultraschallsender und einen Ultraschallempfänger aufweisen, die als getrennte Einzelkomponenten ausgebildet sind. Wesentlich vorteilhafter ist es insbesondere unter dem Aspekt eines verringerten Platzbedarfs und geringerer Entstehungskosten jedoch, wenn ein Ultraschallwandler eingesetzt wird, der in einem Sendeintervall als Ultraschallsender und in einem zeitlich nach dem Sendeintervall liegenden Empfangsintervall als Ultraschallempfänger arbeitet. Derartige Ultraschallwandler werden mitunter auch als Ultraschall-Transducer bezeichnet.

Die beispielsweise in einem IC-Chip integrierte Ansteuer- und Auswerteelektronik für ein Ultraschall-Messsystem verfügt über mehrere Anschlusspins für einerseits die Ausgabe von Ansteuerspannungen für die Anregung des Ultraschallsenders zur Erzeugung von Ultraschallwellen und für den Eingang von Auswertespannungen des Ultraschallempfängers bei dem Empfang eines Echos. Die Herstellungskosten eines IC-Chips hängen signifikant von der benötigten Chipfläche ab. Jeder Anschluss-Pin erfordert, dass Chipfläche vorgehalten werden muss. Insoweit ist es also für die Herstellung von IC-Chips erstrebenswert, die Anzahl von Anschluss-Pins bzw. Anschluss-Pads zu minimieren.

Aus WO-A-2014/166835 ist eine Vorrichtung zur Messung mittels Ultraschall, insbesondere als Parkhilfe für Fahrzeuge bekannt, bei der die Ansteuerung des Ultraschall-Transducers sowie die Auswertung der Echosignale in einem IC erfolgt. Das IC hat vier Ausgangsanschlüsse, und zwar zwei zum Ausgeben der Ansteuersignale für den Ultraschall-Transducer und zwei weitere Anschlüsse, über die dem IC die in elektrische Signale umgesetzten Echosignale zwecks Auswertung zugeführt werden.

Eine weitere Ultraschall-Messvorrichtung mit einem Ultraschall-Transducer ist in EP-A-3 537 177 beschrieben.

Aufgabe der Erfindung ist es, einen Ultraschall-Messvorrichtung zu schaffen, deren Ansteuer- und Auswerteelektronik in einem IC-Chip mit minimaler Anzahl an Anschluss-Pins bzw. Anschluss-Pads integrierbar ist.

Zur Lösung dieser Aufgabe wird mit der Erfindung eine Vorrichtung zur Ansteuerung eines Ultraschall-Transducers und zur Auswertung von von dem Ultraschall-Transducer gelieferten Messsignalen vorgeschlagen, die versehen ist mit
- einer integrierten Schaltung, die zwei nach außen geführte IC-Anschlüsse zur elektrischen Verbindung mit einem Ultraschall-Transducer aufweist,
- wobei an die IC-Anschlüsse der integrierten Schaltung zum Aussenden eines Ultraschall-Burstsignals in einer Ansteuerphase eine alternierend umpolbare Ansteuerspannung anlegbar ist und an den IC-Anschlüssen der integrierten Schaltung bei Empfang eines Ultraschall-Echosignals in einer Empfangsphase eine von dem Ultraschall-Transducer ausgebbare Auswertespannung anliegt,
- wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
- einer als Bestandteil der integrierten Schaltung ausgebildeten Ansteuereinheit zur Erzeugung der Ansteuerspannung, wobei die Ansteuereinheit mit einer zwischen einem Versorgungspotential und einem Bezugspotential, insbesondere Masse, angeordneten Vollbrückenschaltung mit zwei jeweils zwei Ansteuer-Halbleiterschalter aufweisende Halbbrückenschaltungen versehen ist, deren beide jeweils zwei Ansteuer-Halbleiterschalter verbindende Schaltungsknoten mit den beiden IC-Anschlüssen der integrierten Schaltung elektrisch verbunden sind,
- einer als Bestandteil der integrierten Schaltung ausgebildeten Auswerteeinheit mit einem Auswertespannungen in dem Niedervoltbereich verarbeitenden Verstärker mit zwei Eingangsanschlüssen, die mit den IC-Anschlüssen der integrierten Schaltung elektrisch verbunden sind,
- einem Spannungsbegrenzungselement in jeder elektrischen Verbindung zwischen den Eingangsanschlüssen des Verstärkers und den beiden IC-Anschlüssen der integrierten Schaltung, wobei beide Spannungsbegrenzungselemente die an den Eingangsanschlüssen des Verstärkers anliegende Spannung auf einen Wert in dem Niedervoltbereich begrenzen,
- einer als Bestandteil der integrierten Schaltung ausgebildeten Steuereinheit zur Ansteuerung der Ansteuer- Halbleiterschalter,
- wobei zum Anlegen der Steuerspannung an die IC-Anschlüsse der integrierten Schaltung von den vier Ansteuer-Halbleiterschaltern wechselweise jeweils zwei Ansteuer-Halbleiterschalter einschaltbar sowie jeweils zwei Ansteuer-Halbleiterschalter ausschaltbar sind und
- wobei zum Auswerten einer an den IC-Anschlüssen der integrierten Schaltung anliegenden Auswertespannung die vier Ansteuer-Halbleiterschalter ausgeschaltet sind.

Ferner wird zur Lösung der oben genannten Aufgabe mit der Erfindung eine Ultraschall-Messvorrichtung vorgeschlagen, die versehen ist mit
- einem spannungsumsetzerfreien ansteuerbaren Ultraschall-Transducer, der zwei Transducer-Anschlüsse aufweist, an die zum Aussenden eines Ultraschall-Burstsignals in einer Ansteuerphase eine alternierend umpolbare Ansteuerspannung anlegbar ist und an denen bei Empfang eines Ultraschall-Echosignals in einer Empfangsphase eine Auswertespannung anliegt, wobei der Ultraschall-Transducer in einer Ausschwingphase zwischen einer Ansteuerphase und einer Empfangsphase ausschwingt,
- wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
- einer Ansteuereinheit zur Erzeugung der Ansteuerspannung, wobei die Ansteuereinheit mit einer zwischen einem Versorgungspotential und einem Bezugspotential, insbesondere Masse, angeordneten Vollbrückenschaltung mit zwei jeweils zwei Ansteuer-Halbleiterschalter aufweisende Halbbrückenschaltungen versehen ist, deren beide jeweils zwei Ansteuer-Halbleiterschalter verbindende Schaltungsknoten über jeweils eine Verbindungsleitung mit den beiden Transducer-Anschlüssen des Ultraschall-Transducers verbunden sind,
- einer Auswerteeinheit mit einem Auswertespannungen in dem Niedervoltbereich verarbeitenden Verstärker mit zwei Eingangsanschlüssen, die über Anschlussleitungen elektrisch mit den beiden Schaltungsknoten der Halbbrückenschaltung der Ansteuereinheit verbunden sind,
- einem Spannungsbegrenzungselement in jeder Anschlussleitung wobei beide Spannungsbegrenzungselemente die an den Eingangsanschlüssen des Verstärkers anliegende Spannung auf einen Wert in dem Niedervoltbereich begrenzen,
- einer Steuereinheit zur Ansteuerung der Ansteuer- Halbleiterschalter,
- wobei zum Versorgen des Ultraschall-Transducers mit der Ansteuerspannung zwecks Aussendens eines Ultraschall-Burstsignals von den vier Ansteuer-Halbleiterschaltern wechselweise jeweils zwei Ansteuer-Halbleiterschalter einschaltbar sowie zwei Ansteuer-Halbleiterschalter ausschaltbar sind und
- wobei zum Auswerten einer an den Transducer-Anschlüssen des Ultraschall-Transducers anliegenden Auswertespannung die vier Ansteuer-Halbleiterschalter ausgeschaltet sind.

Bei der erfindungsgemäßen Ultraschall-Messvorrichtung wird mit einem spannungsumsetzerfreien Ultraschall-Transducer (d.h. ohne Transformator oder Schaltwandler) gearbeitet. Dieser weist zwei Transducer-Anschlüsse auf, an die in der Ansteuerphase eines Messintervalls über eine Vollbrückenschaltung alternierend Ansteuerspannungen im Bereich von bis zu 150 V angelegt werden, um den Ultraschall-Transducer und genauer gesagt sein Schwingelement zum Aussenden von Ultraschall-Burstsignalen zu veranlassen, bei denen es sich um eine Folge von Ultraschall-Pulsen handelt.

Über dieselben Anschlüsse des Ultraschall-Transducers, über die dieser in der Ansteuerphase mit der Ansteuerspannung angesteuert wird, gibt der Ultraschall-Transducer in der Empfangsphase des Messintervalls eine Auswertespannung aus, die aus der Anregung seines Schwingelements aufgrund empfangener Ultraschallsignale resultiert, bei denen es sich vornehmlich um das Echosignal des zuvor ausgesendeten Ultraschall-Burstsignals handelt. Die Größenordnung der Auswertespannung ist etwa zwei Zehnerpotenzen kleiner als die Anregungsspannung. Insoweit kann man bei der Auswertespannung von einer Niedervoltspannung sprechen, während sich die Ansteuerspannungen demgegenüber und in Relation zu diesem Niedervoltbereich im Hochvoltbereich bewegen.

Der Hochvoltbereich der Ansteuerelektronik einer integrierten Schaltung, d.h. die Vollbrückenschaltung der Ansteuereinheit der integrierten Schaltung der Ultraschall-Messvorrichtung für die Erzeugung der Ansteuerspannung, und der Niedervoltbereich, d.h. die Auswerteeinheit der Ultraschall-Messvorrichtung mit ihrem zwei Eingangsanschlüsse aufweisenden Verstärker der integrierten Schaltung, müssen also voneinander elektrisch entkoppelbar oder zumindest relativ zueinander blockierbar sein. Die integrierte Schaltung weist zwei nach außen geführte IC-Anschlüsse auf, an die der Ultraschall-Transducer über seine zwei Transducer-Anschlüsse angeschlossen ist. Die Entkopplung der Ansteuereinheit innerhalb der integrierten Schaltung von ihren beiden IC-Anschlüssen in der Empfangsphase, innerhalb der die Auswertung der an den beiden IC-Anschlüssen anliegenden Auswertespannung erfolgt, kann dadurch realisiert werden, dass sämtliche Ansteuer-Halbleiterschalter der Vollbrückenschaltung ausgeschaltet sind. Die Entkopplung der Auswerteeinheit, d.h. die Entkopplung der Eingangsanschlüsse des Verstärkers von den beiden IC-Anschlüssen in der Ansteuerphase kann durch Spannungsbegrenzungselemente der integrierten Schaltung realisiert werden, die in jeder der Verbindungsleitungen zu den beiden IC-Anschlüssen geschaltet sind, wobei mit diesen beiden Verbindungsleitungen letztendlich auch die Verbindungsknoten zwischen den Ansteuer-Halbleiterschaltern der beiden Halbbrückenschaltungen der Vollbrückenschaltung der Ansteuereinheit verbunden sind. Die Ansteuerung der Ansteuer-Halbleiterschalter der Vollbrückenschaltung erfolgt mittels einer Steuereinheit, die, je nach Ausgestaltung der Spannungsbegrenzungselemente, auch diese ansteuert, und zwar zeitlich abgestimmt auf die Ansteuerung der Ansteuer-Halbleiterschalter.

Durch die erfindungsgemäß vorgesehene bedarfsweise "Trennung" des Hochvoltbereichs vom Niedervoltbereich der Elektronik der Ultraschall-Messvorrichtung (Ansteuereinheit und Auswerteeinheit sowie Spannungsbegrenzungselemente) ist es möglich, die Anzahl von Anschlusspads eines diese Elektronik als integrierte Schaltungen aufweisenden IC-Chips auf zwei Anschluss-Pads zu reduzieren. Weitere Anschluss-Pads sind insoweit nicht erforderlich. Die Elektronik selbst ist zwischen einem Bezugspotential, typischerweise Masse, und einer Versorgungsspannung angeordnet, wobei im Bedarfsfalle auch noch eine Ladungspumpe mit extern beschalteter Ladungskapazität vorgesehen sein kann. Die durch den Verstärker der Auswerteeinheit verstärkte Auswertespannung an den Anschlüssen des Ultraschall-Transducers kann über ein Anschluss-Pad, das mit dem Ausgang des Verstärkers verbunden ist, vom IC-Chip nach extern weitergeleitet werden.

Der IC-Chip beinhaltet die zuvor genannte erfindungsgemäße Vorrichtung zur Ansteuerung des Ultraschall-Transducers und zur Auswertung der von dem Ultraschall-Transducer gelieferten Messsignale.

Überraschenderweise hat sich gezeigt, dass die erfindungsgemäße Konzeption auch ausreichend Schutz vor einer Beschädigung der Elektronik durch ESD-Entladungen gewährleistet. Dies liegt vornehmlich daran, dass die parasitären Freilaufdioden der vier Ansteuer-Halbleiterschalter der Vollbrückenschaltung genutzt werden können, um ESD-Entladungen entweder nach Masse oder zum Versorgungspotential bzw., sofern vorhanden, über die externe Ladungskapazität jeweils zum Bezugspotential, typischerweise Masse, abzuleiten.

In zweckmäßiger Ausgestaltung der Erfindung kann vorgesehen sein, dass die Spannungsbegrenzungselemente jeweils als ein von der Steuereinheit ansteuerbarer, in einer der Verbindungsleitungen angeordneter Trenn-Halbleiterschalter zum wahlweisen Trennen und Schließen der elektrischen Verbindungsleitungen zwischen den Eingangsanschlüssen des Verstärkers und den Anschlüssen des Ultraschall-Transducers ausgebildet sind, wobei die Trenn-Halbleiterschalter beim Versorgen des Ultraschall-Transducers mit der Ansteuerspannung ausgeschaltet und zum Auswerten einer an den Anschlüssen des Ultraschall-Transducers anliegenden Auswertespannung eingeschaltet sind. Bei dieser Ausgestaltung der Erfindung begrenzen die Spannungsbegrenzungselemente die an den beiden Eingangsanschlüssen des Verstärkers anliegende Spannung auf nahezu 0 V, wenn man einmal davon ausgeht, dass ein nicht geöffneter Halbleiterschalter keinen Reststrom leitet.

Als Alternative zu der zuvor beschriebenen Ausgestaltung der Spannungsbegrenzungselemente können diese auch als Source-Follower geschaltete FET-Transistoren oder als Emitter-Folger geschaltete Bipolar-Transistoren ausgebildet sein. Durch diese Beschaltung von FET- bzw. Bipolar-Transistoren lässt sich die Spannung an den Eingängen des Verstärkers auf wenige Volt begrenzen, und zwar auch in der Ansteuerphase, in der die Verbindungsleitungen, an denen der Verstärker angeschlossen ist, die Hochvolt-Ansteuerspannungen führen.

In einer weiteren alternativen Ausgestaltung der Spannungsbegrenzungselemente sind diese als eine Schaltung mit einem in einer der beiden Verbindungsleitungen angeordneten Widerstand und einer zwischen beiden Verbindungsleitungen angeordneten Spannungsbegrenzungsdiode, insbesondere Zenerdiode, ausgebildet. Durch diese Schaltung wird mit dem gleichen Ergebnis wie bei den beiden anderen Alternativen für die Ausgestaltung der Spannungsbegrenzungselemente erreicht, dass am Eingang des Verstärkers maximal eine Spannung von wenigen Volt anliegt, auch wenn in der Ansteuerphase an den Anschlüssen des Ultraschall-Transducers, an denen dann Hochvolt-Spannungen anliegen, die hohen Ansteuerspannungen anstehen.

Nach der Erfindung wird, wie oben beschrieben, ein Ultraschall-Transducer eingesetzt. Dieser muss nach seiner Ansteuerung, also nach seiner Ansteuerphase, zunächst ausschwingen, um dann in der Empfangsphase Ultraschall-Echosignale zu empfangen. Zwischen der Ansteuerphase und der Empfangsphase existiert also eine Ausschwingphase. Diese sollte so gering wie möglich sein, um nämlich auch aus dem Nahbereich kommende Echosignale, die somit kurze Zeit nach Abschluss der Ansteuerphase bereits anstehen, erfassen und auswerten zu können. Es ist bekannt, diese Ausschwingphase durch Dämpfungsmaßnahmen für das Schwingelement des Ultraschall-Transducers zu verkürzen.

In einer insoweit vorteilhaften Ausgestaltung der Erfindung ist die Ultraschall-Messvorrichtung zusätzlich versehen mit einer Dämpfungsschaltung, die parallel zu den beiden Eingangsanschlüssen des Verstärkers angeordnet ist und zwei weitere Halbleiterschalter aufweist, mit denen die Dämpfungsschaltung mit jeweils einer der Verbindungsleitungen verbindbar oder von dieser trennbar ist, wobei die beiden weiteren Halbleiterschalter von der Steuereinheit ansteuerbar sind und während der Versorgung des Ultraschall-Transducers mit der Ansteuerspannung ausgeschaltet, danach sowie vor der Auswertung einer an den Anschlüssen des Ultraschall-Transducers anliegenden Auswertespannung zwecks Dämpfung des Ausschwingens des Ultraschall-Transducers in der Ausschwingphase eingeschaltet und während der Auswertung einer an den Anschlüssen des Ultraschall-Transducers anliegenden Auswertespannung wieder ausgeschaltet sind.

Die zuvor beschriebene Dämpfungsschaltung weist vorteilhafterweise mindestens einen Widerstand und/oder mindestens eine Induktivität auf.

Alternativ oder in Ergänzung zur zuvor beschriebenen Dämpfungsschaltung kann bei einer weiteren Ausgestaltung der Erfindung vorgesehen sein, dass die Steuereinheit die Ansteuer-Halbleiterschalter nach dem Versorgen des Ultraschall-Transducers mit der Ansteuerspannung und vor dem Auswerten einer an den Anschlüssen des Ultraschall-Transducers anliegenden Auswertespannung zur Erzeugung von Einzel- oder Doppel- oder Mehrfach-Dämpfungspulsen ansteuert, mit dem oder mit denen der Ultraschall-Transducer zum Dämpfen seines Ausschwingens in der Ausschwingphase phasenverschoben und insbesondere gegenphasig zum Ausschwingen des Ultraschall Transducers beaufschlagbar sind.

Bei der zuvor beschriebenen Ausgestaltung der Erfindung ist es von Vorteil, wenn bei Beaufschlagung des Ultraschall-Transducers mit mehreren Dämpfungspulsen deren Energie verändert, insbesondere von Dämpfungspuls zu Dämpfungspuls verringert wird.

Durch das erfindungsgemäße Ansteuerungskonzept, bei dem der Ultraschall-Transducer keinen auf Masse liegenden Anschluss aufweist, bewegt sich die Auswertespannung des Ultraschall-Transducers an den beiden Anschlüssen zwischen 0 V und einem Spannungswert von einigen wenigen Volt. In diesem Fall benötigt man für die Auswertung der Auswertespannung einen Verstärker, dessen Arbeitspunkt auf dem Mittenpotential des Niedervoltbereichs der Auswertespannung liegt. Hierzu kann in vorteilhafter Weiterbildung der Erfindung dergestalt vorgegangen werden, dass zwischen den beiden Eingangsanschlüssen des Verstärkers eine Arbeitspunkt-Einstellschaltung angeordnet ist, die zwei gleichgroße Widerstände und zwischen diesen einen Potentialanschluss aufweist, an den das Mittenpotenzial des von dem Verstärker zu verarbeitenden Auswertespannungsbereichs anliegt, der seinerseits zwischen 0 V und einigen wenigen Volt, insbesondere zwischen 0 V und 10 V oder zwischen 0 und 8 V oder zwischen 0 V und 5 V oder zwischen 0 und 3,3 V oder zwischen 0 V und 1,8 V beträgt.

In vorteilhafter Ausgestaltung der erfindungsgemäßen Ansteuer- und Auswertevorrichtung ist vorgesehen, dass die Spannungsbegrenzungselemente jeweils als ein von der Steuereinheit ansteuerbarer, in einer der elektrischen Verbindungen zwischen den Eingangsanschlüssen des Verstärkers und den Anschlüssen der integrierten Schaltung angeordneter Trenn-Halbleiterschalter zum wahlweisen Trennen und Schließen der elektrischen Verbindung zwischen den Eingangsanschlüssen des Verstärkers und den Anschlüssen der integrierten Schaltung des Ultraschall-Transducers ausgebildet sind, wobei die Trenn-Halbleiterschalter zum Versorgen der Anschlüsse der integrierten Schaltung mit der Ansteuerspannung ausgeschaltet und zum Auswerten einer an den Anschlüssen der integrierten Schaltung anliegenden Auswertespannung eingeschaltet sind.

In weiterer vorteilhafter Ausgestaltung der erfindungsgemäßen Ansteuer- und Auswertevorrichtung ist vorgesehen, dass die Spannungsbegrenzungselemente jeweils als Source-Follower geschaltete FET-Transistoren oder als Emitter-Folger geschaltete Bipolar-Transistoren ausgebildet sind.

In weiterer vorteilhafter Ausgestaltung der erfindungsgemäßen Ansteuer- und Auswertevorrichtung ist vorgesehen, dass die Spannungsbegrenzungselemente jeweils als eine Schaltung aus einem in der besagten elektrischen Verbindung zwischen den Eingangsanschlüssen des Verstärkers und den Anschlüssen der integrierten Schaltung angeordneten Widerstand und einer diesen mit dem Bezugspotenzial verbindenden Spannungsbegrenzungsdiode, insbesondere Zenerdiode, ausgebildet sind.

In weiterer vorteilhafter Ausgestaltung der erfindungsgemäßen Ansteuer- und Auswertevorrichtung ist eine als Bestandteil der integrierten Schaltung ausgebildeten Dämpfungsschaltung vorgesehen, die parallel zu den beiden Eingangsanschlüssen des Verstärkers angeordnet ist und zwei weitere Halbleiterschalter aufweist, mit denen die Dämpfungsschaltung mit jeweils einer der elektrischen Verbindungen zwischen den Eingangsanschlüssen des Verstärkers und den Anschlüssen der integrierten Schaltung verbindbar oder von dieser trennbar ist, wobei die beiden weiteren Halbleiterschalter von der Steuereinheit ansteuerbar sind und während der Versorgung der Anschlüsse der integrierten Schaltung mit der Ansteuerspannung ausgeschaltet, danach sowie vor der Auswertung einer an den Anschlüssen der integrierten Schaltung anliegenden Auswertespannung zwecks Dämpfung eines Ausschwingens des Ultraschall-Transducers in einer Ausschwingphase eingeschaltet und während der Auswertung einer an den Anschlüssen der integrierten Schaltung anliegenden Auswertespannung wieder ausgeschaltet sind.

In weiterer vorteilhafter Ausgestaltung der erfindungsgemäßen Ansteuer- und Auswertevorrichtung ist vorgesehen, dass die Dämpfungsschaltung mindestens einen Widerstand und/oder mindestens eine Induktivität aufweist.

In weiterer vorteilhafter Ausgestaltung der erfindungsgemäßen Ansteuer- und Auswertevorrichtung ist vorgesehen, dass die Steuereinheit die Ansteuer-Halbleiterschalter nach dem Versorgen der Anschlüsse der integrierten Schaltung mit der Ansteuerspannung und vor dem Auswerten einer an den Anschlüssen der integrierten Schaltung anliegenden Auswertespannung zur Erzeugung von Einzel- oder Doppel- oder Mehrfach-Dämpfungspulsen ansteuert, mit dem oder mit denen der Ultraschall-Transducer zum Dämpfen eines Ausschwingens in einer Ausschwingphase phasenverschoben und insbesondere gegenphasig zum Ausschwingen des Ultraschall-Transducers beaufschlagbar sind.

In weiterer vorteilhafter Ausgestaltung der erfindungsgemäßen Ansteuer- und Auswertevorrichtung ist vorgesehen, dass bei Beaufschlagung der Anschlüsse der integrierten Schaltung mit mehreren Dämpfungspulsen deren Energie veränderbar, insbesondere von Dämpfungspuls zu Dämpfungspuls verringerbar ist.

In weiterer vorteilhafter Ausgestaltung der erfindungsgemäßen Ansteuer- und Auswertevorrichtung ist vorgesehen, dass zwischen den beiden Eingangsanschlüssen des Verstärkers eine Arbeitspunkt-Einstellschaltung angeordnet ist, die zwei gleich große Widerstände und zwischen diesen einen Potentialanschluss aufweist, an den das Mittenpotenzial des von dem Verstärker zu verarbeitenden Auswertespannungsbereichs anliegt, der seinerseits zwischen 0 V und einigen wenigen Volt, insbesondere zwischen 0 V und 10 V oder zwischen 0 V und 8 V oder zwischen 0 V und 5 V oder zwischen 0 V und 3,3 V beträgt.

Die Erfindung wird nachfolgend anhand mehrerer Ausführungsbeispiele und unter Bezugnahme auf die Zeichnung näher erläutert. Im Einzelnen zeigen dabei:
- Fig. 1: schematisch den generellen Aufbau der integrierten Schaltung für die Ansteuerung eines Ultraschall-Transducers und die zumindest erste Verarbeitung von Auswertespannungen als Folge von von dem Ultraschall-Transducer empfangenen Echosignalen,
- Fig. 2: ein erstes Ausführungsbeispiel der Realisierung der Spannungsbegrenzungselemente zur Entkopplung des Ansteuerteils vom Auswerteteil der integrierten Schaltung,
- Fig. 3: ein zweites Ausführungsbeispiel der Realisierung der Spannungsbegrenzungselemente zur Entkopplung des Ansteuerteils vom Auswerteteil der integrierten Schaltung und
- Fig. 4: ein drittes Ausführungsbeispiel der Realisierung der Spannungsbegrenzungselemente zur Entkopplung des Ansteuerteils vom Auswerteteil der integrierten Schaltung.

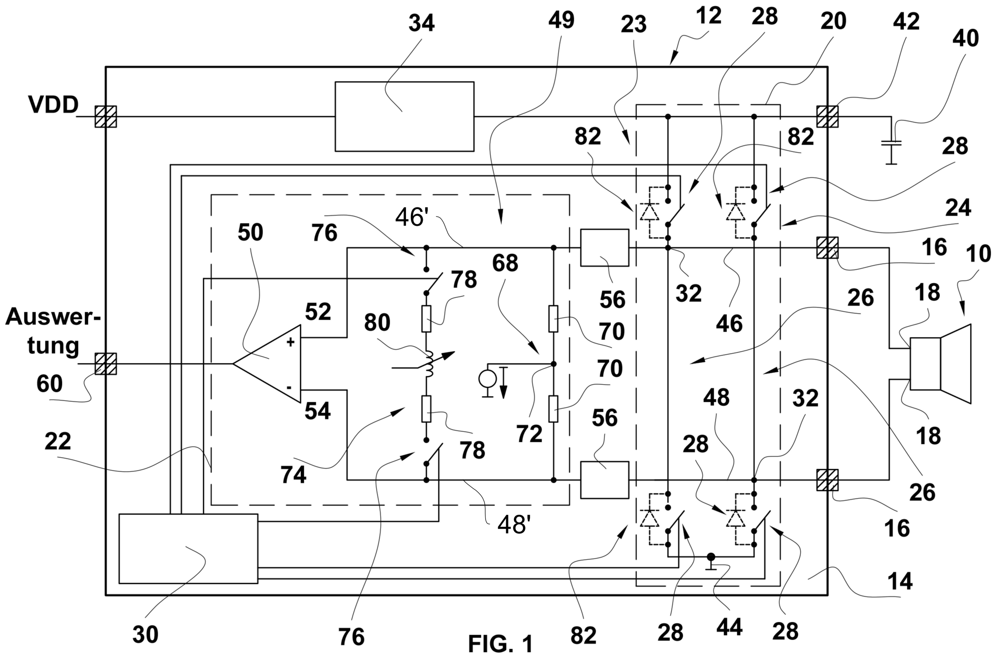

In Fig. 1 ist der generelle Aufbau des Schaltungskonzepts nach der Erfindung für die Ansteuerung eines ohne Spannungsumsetzer zu betreibenden Ultraschall-Transducers 10 zwecks Aussendens von Ultraschall-Burstsignalen und für die zumindest erste Verarbeitung von Auswertespannungen des Ultraschall-Transducers 10 gezeigt, die an dem Ultraschall-Transducers 10 als Folge des Empfangs von Echosignalen anliegen. Die Schaltung 12 ist in einem Halbleiter-Chip 14 integriert, wobei ein Merkmal dieses Halbleiter-Chips 14 darin besteht, dass für den Anschluss des externen Ultraschall-Transducers 10 lediglich zwei IC-Anschlüsse 16 erforderlich sind, die mit den beiden Transducer-Anschlüssen 18 des Ultraschall-Transducers 10 jeweils verbunden sind.

Die integrierte Schaltung 12 weist einen Ansteuer- bzw. Hochvoltschaltungsteil 20 und einen Auswerte- bzw. Niedervoltschaltungsteil 22 auf. Beide Schaltungsteile 20 bzw. 22 sind intern mit den IC-Anschlüssen 16 verbunden. Der Ansteuer- bzw. Hochvoltschaltungsteil 20 weist eine Ansteuereinheit 23 mit einer Vollbrückenschaltung 24 auf, die zwei Halbbrückenschaltungen 26 umfasst. Jede dieser Halbbrückenschaltungen 26 wiederum weist in bekannter Weise zwei Ansteuer-Halbleiterschalter 28 auf, die durch eine Steuereinheit 30 wechselweise angesteuert werden und die in bekannter Weise miteinander verschaltet sind, wobei ihre jeweiligen Schaltungsknoten 32 zwischen den beiden Ansteuer-Halbleiterschaltern 28 mit den IC-Anschlüssen 16 verbunden sind. In diesem Ausführungsbeispiel erfolgt die Bereitstellung der Ansteuerspannung, die in Bereichen von 40V bis 150V liegen kann; durch eine Ladungspumpenschaltung 34, die mit einer Versorgungsspannung VDD verbunden ist und ihrerseits einen externen Ladungskondensator 40 versorgt, der an einem dritten Anschluss-Pad 42 des Halbleiter-Chips 14 angeschlossen ist. Die Vollbrückenschaltung 24 ist intern zwischen der Ladungspumpenschaltung 34 und einem Bezugspotenzial, beispielsweise Masse 44 angeordnet.

Jede der beiden Halbbrückenschaltungen 26 ist an ihrem jeweiligen Schaltungsknoten 32 zwischen ihren beiden Ansteuer-Halbleiterschaltern 28 mit einem anderen der beiden IC-Anschlüssen 16 verbunden, und zwar durch eine Verbindungsleitung 46 bzw. 48. Mit diesen beiden IC-Anschlüssen 16 ist überdies auch eine Auswerteeinheit 49 des Auswerte- bzw. Niedervoltschaltungsteils 22 verbunden. Die Auswerteinheit 49 weist einen Verstärker 50 auf, mit dessen beiden Eingängen 52, 54 die Anschlussleitungen 46', 48' verbunden sind, die entweder mit den Schaltungsknoten 32 und damit indirekt, nämlich über die Verbindungsleitungen 46, 48 mit den IC-Anschlüssen 16 oder direkt mit diesen verbunden sind. Zwischen den Schaltungsteilen 20 und 22 des Halbleiter-Chips 14 befinden sich in jeder Anschlussleitung 46', 48' Spannungsbegrenzungselemente 56, die entweder für eine Trennung des Auswerte- bzw. Niedervoltspannungsteils 22 vom Hochvoltschaltungsteil 20 in der Ansteuerphase des Ultraschall-Transducers 10 oder aber zumindest für eine Spannungsbegrenzung auf eine einige wenige Volt betragende Spannung sorgen, die während der Ansteuerphase des Ultraschall-Transducers 10 an den Eingängen 52, 54 des Verstärkers 50 anliegt.

Durch diese Art des elektrischen Schutzes des Auswerte- bzw. Niedervoltschaltungsteils 22 vor zu hohen Spannungen in der Ansteuerphase des Ultraschall-Transducers 10 ist es möglich, sowohl an die IC-Anschlüsse 16 die hohen Ansteuerspannungen anzulegen als auch an den IC-Anschlüssen 16 die vergleichsweise niedrigen Auswertespannungen abzugreifen.

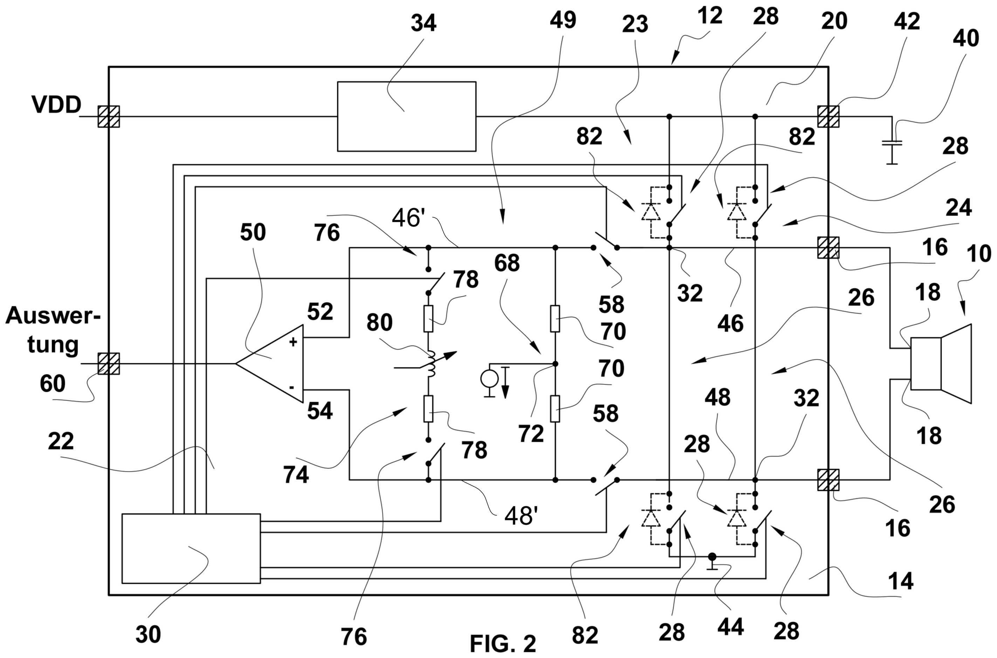

In Fig. 2 ist gezeigt, dass die Spannungsbegrenzungselemente 56 als Trenn-Halbleiterschalter 58 ausgebildet sein können, die wie die Ansteuer-Halbleiterschalter 28 von der Steuereinheit 30 ansteuerbar sind. Die Steuereinheit 30 öffnet also die Trenn-Halbleiterschalter 58 in der Ansteuerphase, in der sie die Ansteuer-Halbleiterschalter 28 wechselweise öffnet und schließt, wie es bei einer Vollbrückenschaltung an sich üblich ist, so dass der Ultraschall-Transducer 10 mit der notwendigen vergleichsweisen hohen elektrischen Energie zur Aussendung von Ultraschall-Burstsignalen versorgt wird. Zeitlich nach der Ansteuerphase wechselt der Ultraschall-Transducers 10 seine Funktion in der Empfangsphase, indem er empfangene Echosignale in elektrische Auswertespannungen umsetzt. In dieser Empfangsphase öffnet die Steuereinheit 30 sämtliche Ansteuer-Halbleiterschalter 28 und schließt die Trenn-Halbleiterschalter 58, so dass die Auswertespannung, die nun an den IC-Anschlüssen 16 anliegt, vom Verstärker 50 verstärkt werden kann. Die verstärkte Auswertespannung gelangt dann beispielsweise über ein weiteres Anschluss-Pad 60 zu einer hier nicht dargestellten weiteren Auswerteeinheit.

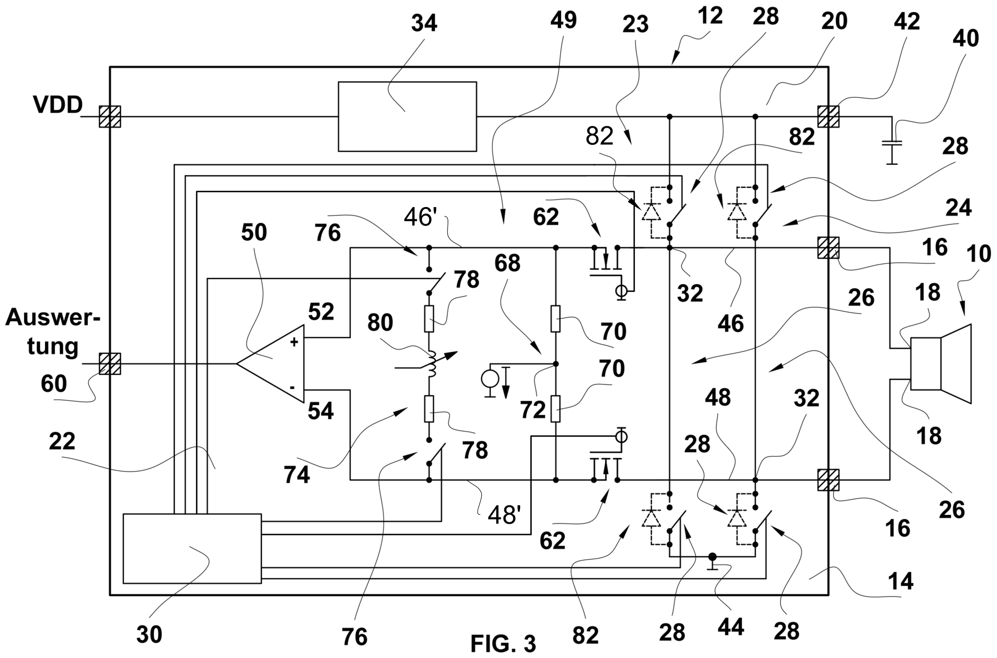

In Fig. 3 ist zu erkennen, dass die beiden Spannungsbegrenzungselemente 56 als Source-Follower geschaltete MOSFET-Transistoren 62 realisiert sind. Die Gates beider MOSFET-Transistoren 62 werden mit einer niedrigen Spannung versorgt, wie es bei als Source-Follower geschalteten FET-Transistoren grundsätzlich bekannt ist. Auf diese Weise erfolgt also eine Spannungsbegrenzung auf einen Niedervolt-Wert, der höher gewählt ist als die Auswertespannungen, die der Ultraschall-Transducer 10 in seiner Empfangsphase ausgibt.

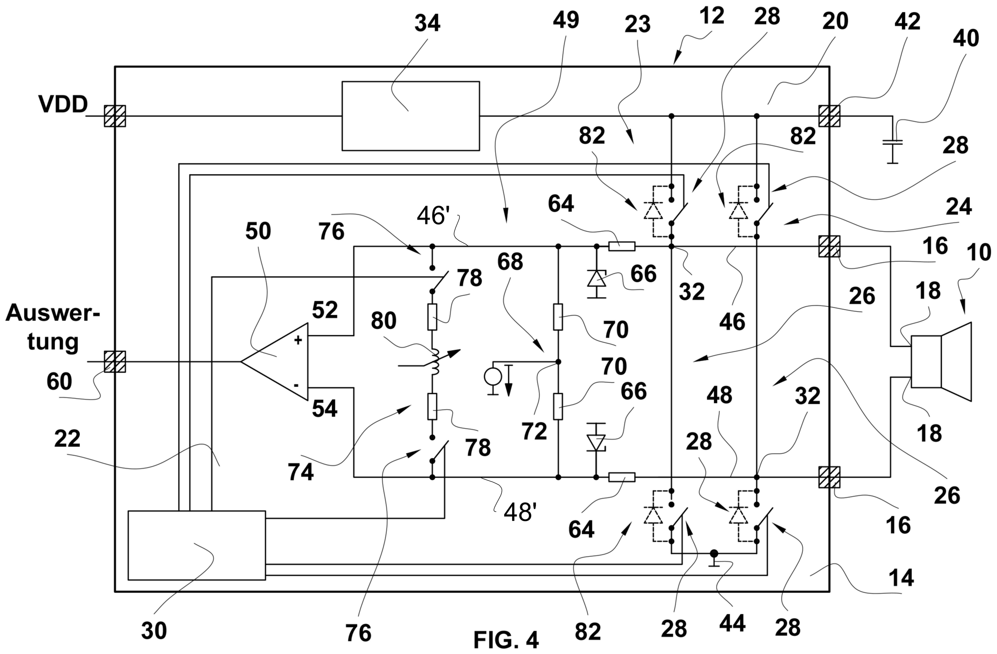

Eine dritte Variante der Ausbildung der Spannungsbegrenzungselemente 56 ist in Fig. 4 gezeigt. Hier ist jedes Spannungsbegrenzungselement 56 durch eine Schaltung aus einem Widerstand 64 mit gegen Bezugspotenzial geschalteter Spannungsbegrenzungsdiode 66 in Form beispielsweise einer Zehnerdiode ausgeführt. Die Widerstände 64 sind in den Anschlussleitungen 46', 48' angeordnet.

In Fig. 1, aber auch in den anderen Fign. 2 bis 4 sind als Teil der Auswerteeinheit 49 noch zwei weitere Schaltungen gezeigt, von denen die Schaltung 68 der Arbeitspunkteinstellung des Verstärkers 50 dient. Die Schaltung 68 weist zwei Widerstände 70 auf, die als Reihenschaltung zwischen die beiden Verbindungsleitungen 46, 48 geschaltet sind und in deren Verbindungsknoten 72 die Mittenspannung des Spannungsbereichs eingespeist wird, innerhalb dessen sich die Auswertespannungen bewegen.

Die zweite zusätzliche Schaltung 74 dient zur Dämpfung des Ultraschall-Transducers 10 in dessen Ausschwingphase, die sich an dessen Ansteuerphase anschließt und möglichst kurz sein sollte. Diese Dämpfungsschaltung 74 wird über zwei Halbleiterschalter 76 wahlweise zugeschaltet und befindet sich wie die Schaltung 68 zwischen den Anschlussleitungen 46' und 48'. Die normalerweise offenen Halbleiterschalter 76 werden in der Ausschwingphase des Ultraschall-Transducers 10 geschlossen und ansonsten geöffnet, was z.B. durch Ansteuerung der Steuereinheit 30 erfolgen kann. Die Dämpfungsschaltung 74 selbst weist in diesem Ausführungsbeispiel neben zwei Dämpfungswiderständen 78 auch eine Dämpfungsspule 80 auf, die zusammen in Reihe geschaltet sind.

Durch das erfindungsgemäße Konzept gelingt es, die Anzahl an IC-Anschlüssen 16 für den Ultraschall-Transducer 10 das notwendige Mindestmaß von zwei Pads zu begrenzen. Gegen ESD-Entladungen ist der Ultraschall-Transducer 10 geschützt, indem die gestrichelt eingezeichneten parasitären Freilaufdioden 82 der Ansteuer-Halbleiterschalter 28 die Ableitung von elektrischer Ladung vom Ultraschall-Transducer 10 entweder zum Bezugspotenzial (Masse 44) oder zum Ladungskondensator 40 ermöglichen.

### Weitere Aspekte der Erfindung:

1. Vorrichtung zur Ansteuerung eines Ultraschall-Transducers und zur Auswertung von von dem Ultraschall-Transducer gelieferten Messsignalen, mit
   - einer integrierten Schaltung (12), die zwei nach außen geführte IC-Anschlüsse (16) zur elektrischen Verbindung mit einem Ultraschall-Transducer (10) aufweist,
   - wobei an die IC-Anschlüsse (16) der integrierten Schaltung (12) zum Aussenden eines Ultraschall-Burstsignals in einer Ansteuerphase eine alternierend umpolbare Ansteuerspannung anlegbar ist und an den IC-Anschlüssen (16) der integrierten Schaltung (12) bei Empfang eines Ultraschall-Echosignals in einer Empfangsphase eine von dem Ultraschall-Transducer ausgebbare Auswertespannung anliegt,
   - wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
   - einer als Bestandteil der integrierten Schaltung (12) ausgebildeten Ansteuereinheit (23) zur Erzeugung der Ansteuerspannung, wobei die Ansteuereinheit (23) mit einer zwischen einem Versorgungspotential (VDD) und einem Bezugspotential (44), insbesondere Masse, angeordneten Vollbrückenschaltung (24) mit zwei jeweils zwei Ansteuer-Halbleiterschalter (28) aufweisende Halbbrückenschaltungen (26) versehen ist, deren beide jeweils zwei Ansteuer-Halbleiterschalter (28) verbindende Schaltungsknoten (32) mit den beiden IC-Anschlüssen (16) der integrierten Schaltung (12) elektrisch verbunden sind,
   - einer als Bestandteil der integrierten Schaltung (12) ausgebildeten Auswerteeinheit (49) mit einem Auswertespannungen in dem Niedervoltbereich verarbeitenden Verstärker (50) mit zwei Eingangsanschlüssen (52, 54), die mit den beiden IC-Anschlüssen (16) der integrierten Schaltung (12) elektrisch verbunden sind,
   - einem Spannungsbegrenzungselement (56) in jeder elektrischen Verbindung (46', 48') zwischen den Eingangsanschlüssen (52, 54) des Verstärkers (50) und den beiden IC-Anschlüssen (16) der integrierten Schaltung (12), wobei beide Spannungsbegrenzungselemente (56) die an den Eingangsanschlüssen (52, 54) des Verstärkers (50) anliegende Spannung auf einen Wert in dem Niedervoltbereich begrenzen,
   - einer als Bestandteil der integrierten Schaltung (12) ausgebildeten Steuereinheit (30) zur Ansteuerung der Ansteuer- Halbleiterschalter (28),
   - wobei zum Anlegen der Steuerspannung an die IC-Anschlüsse (16) der integrierten Schaltung von den vier Ansteuer-Halbleiterschaltern (28) wechselweise jeweils zwei Ansteuer-Halbleiterschalter (28) einschaltbar sowie jeweils zwei Ansteuer-Halbleiterschalter (28) ausschaltbar sind und
   - wobei zum Auswerten einer an den IC-Anschlüssen (16) der integrierten Schaltung (12) anliegenden Auswertespannung die vier Ansteuer-Halbleiterschalter (28) ausgeschaltet sind.
2. Vorrichtung nach 1, dadurch gekennzeichnet, dass die Spannungsbegrenzungselemente (56) jeweils als ein von der Steuereinheit (30) ansteuerbarer, in einer der elektrischen Verbindungen zwischen den Eingangsanschlüssen (52, 54) des Verstärkers (50) und den IC-Anschlüssen (16) der integrierten Schaltung (12) angeordneter Trenn-Halbleiterschalter (58) zum wahlweisen Trennen und Schließen der elektrischen Verbindungen (46', 48') zwischen den Eingangsanschlüssen (52, 54) des Verstärkers (50) und den IC-Anschlüssen (16) der integrierten Schaltung (12) des Ultraschall-Transducers (10) ausgebildet sind, wobei die Trenn-Halbleiterschalter (58) zum Versorgen der IC-Anschlüsse (16) der integrierten Schaltung (12) mit der Ansteuerspannung ausgeschaltet und zum Auswerten einer an den IC-Anschlüssen (16) der integrierten Schaltung (12) anliegenden Auswertespannung eingeschaltet sind.
3. Vorrichtung nach 1, dadurch gekennzeichnet, dass die Spannungsbegrenzungselemente (56) jeweils als Source-Follower geschaltete FET-Transistoren (62) oder als Emitter-Folger geschaltete Bipolar-Transistoren ausgebildet sind.
4. Vorrichtung nach 1, dadurch gekennzeichnet, dass die Spannungsbegrenzungselemente (56) jeweils als eine Schaltung aus einem in der besagten elektrischen Verbindung (46', 48') zwischen den Eingangsanschlüssen (52, 54) des Verstärkers (50) und den IC-Anschlüssen (16) der integrierten Schaltung (12) angeordneten Widerstand (64) und einer diesen mit dem Bezugspotenzial (44) verbindenden Spannungsbegrenzungsdiode (66), insbesondere Zenerdiode, ausgebildet sind.
5. Vorrichtung nach 1 bis 4, gekennzeichnet durch eine als Bestandteil der integrierten Schaltung (12) ausgebildeten Dämpfungsschaltung (74), die parallel zu den beiden Eingangsanschlüssen (52, 54) des Verstärkers (50) angeordnet ist und zwei weitere Halbleiterschalter (76) aufweist, mit denen die Dämpfungsschaltung (74) mit jeweils einer der elektrischen Verbindungen (46', 48') zwischen den Eingangsanschlüssen (52, 54) des Verstärkers (50) und den IC-Anschlüssen (16) der integrierten Schaltung (12) verbindbar oder von dieser trennbar ist, wobei die beiden weiteren Halbleiterschalter (76) von der Steuereinheit (30) ansteuerbar sind und während der Versorgung der IC-Anschlüsse (16) der integrierten Schaltung (12) mit der Ansteuerspannung ausgeschaltet, danach sowie vor der Auswertung einer an den IC-Anschlüssen (16) der integrierten Schaltung (12) anliegenden Auswertespannung zwecks Dämpfung eines Ausschwingens des Ultraschall-Transducers (10) in einer Ausschwingphase eingeschaltet und während der Auswertung einer an den IC-Anschlüssen (16) der integrierten Schaltung (12) anliegenden Auswertespannung wieder ausgeschaltet sind.
6. Vorrichtung nach 5, dadurch gekennzeichnet, dass die Dämpfungsschaltung (74) mindestens einen Widerstand (78) und/oder mindestens eine Induktivität (80) aufweist.
7. Vorrichtung nach 1 bis 6, dadurch gekennzeichnet, dass die Steuereinheit (30) die Ansteuer-Halbleiterschalter (28) nach dem Versorgen der IC-Anschlüsse (16) der integrierten Schaltung (12) mit der Ansteuerspannung und vor dem Auswerten einer an den IC-Anschlüssen (16) der integrierten Schaltung (12) anliegenden Auswertespannung zur Erzeugung von Einzel- oder Doppel- oder Mehrfach-Dämpfungspulsen ansteuert, mit dem oder mit denen der Ultraschall-Transducer (10) zum Dämpfen eines Ausschwingens in einer Ausschwingphase phasenverschoben und insbesondere gegenphasig zum Ausschwingen des Ultraschall-Transducers (10) beaufschlagbar sind.
8. Vorrichtung nach 7, dadurch gekennzeichnet, dass bei Beaufschlagung der IC-Anschlüsse (16) der integrierten Schaltung (12) mit mehreren Dämpfungspulsen deren Energie veränderbar, insbesondere von Dämpfungspuls zu Dämpfungspuls verringerbar ist.
9. Vorrichtung nach 1 bis 7, dadurch gekennzeichnet, dass zwischen den beiden Eingangsanschlüssen (52, 54) des Verstärkers (50) eine Arbeitspunkt-Einstellschaltung (68) angeordnet ist, die zwei gleich große Widerstände (70) und zwischen diesen einen Potentialanschluss (72) aufweist, an den das Mittenpotenzial des von dem Verstärker (50) zu verarbeitenden Auswertespannungsbereichs anliegt, der seinerseits zwischen 0 V und einigen wenigen Volt, insbesondere 10 V oder 8 V oder 5 V oder 3,3 V beträgt.
10. Ultraschall-Messvorrichtung mit
   - einem spannungsumsetzerfreien ansteuerbaren Ultraschall-Transducer (10), der zwei Transducer-Anschlüsse (18) aufweist, an die zum Aussenden eines Ultraschall-Burstsignals in einer Ansteuerphase eine alternierend umpolbare Ansteuerspannung anlegbar ist und an denen bei Empfang eines Ultraschall-Echosignals in einer Empfangsphase eine Auswertespannung anliegt, wobei der Ultraschall-Transducer (10) in einer Ausschwingphase zwischen einer Ansteuerphase und einer Empfangsphase ausschwingt,
   - wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
   - einer Ansteuereinheit (23) zur Erzeugung der Ansteuerspannung, wobei die Ansteuereinheit (23) mit einer zwischen einem Versorgungspotential (VDD) und einem Bezugspotential (44), insbesondere Masse, angeordneten Vollbrückenschaltung (24) mit zwei jeweils zwei Ansteuer-Halbleiterschalter (28) aufweisende Halbbrückenschaltungen (26) versehen ist, deren beide jeweils zwei Ansteuer-Halbleiterschalter (28) verbindende Schaltungsknoten (32) über jeweils eine Verbindungsleitung (46, 48) mit den beiden Transducer-Anschlüssen (18) des Ultraschall-Transducers (10) verbunden sind,
   - einer Auswerteeinheit (49) mit einem Auswertespannungen in dem Niedervoltbereich verarbeitenden Verstärker (50) mit zwei Eingangsanschlüssen (52, 54), die über Anschlussleitungen (46', 48') elektrisch mit den beiden Schaltungsknoten (32) der Halbbrückenschaltung (26) der Ansteuereinheit (23) verbunden sind,
   - einem Spannungsbegrenzungselement (56) in jeder Anschlussleitung (46', 48') wobei beide Spannungsbegrenzungselemente (56) die an den Eingangsanschlüssen (52, 54) des Verstärkers (50) anliegende Spannung auf einen Wert in dem Niedervoltbereich begrenzen,
   - einer Steuereinheit (30) zur Ansteuerung der Ansteuer- Halbleiterschalter (28),
   - wobei zum Versorgen des Ultraschall-Transducers (10) mit der Ansteuerspannung zwecks Aussendens eines Ultraschall-Burstsignals von den vier Ansteuer-Halbleiterschaltern (28) wechselweise jeweils zwei Ansteuer-Halbleiterschalter (28) einschaltbar sowie zwei Ansteuer-Halbleiterschalter (28) ausschaltbar sind und
   - wobei zum Auswerten einer an den Transducer-Anschlüssen (18) des Ultraschall-Transducers (10) anliegenden Auswertespannung die vier Ansteuer-Halbleiterschalter (28) ausgeschaltet sind.
11. Ultraschall-Messvorrichtung nach 10, dadurch gekennzeichnet, dass die Spannungsbegrenzungselemente (56) jeweils als ein von der Steuereinheit (30) ansteuerbarer, in einer der Verbindungsleitungen (46, 48) angeordneter Trenn-Halbleiterschalter (58) zum wahlweisen Trennen und Schließen der elektrischen Verbindungsleitungen (46, 48) zwischen den Eingangsanschlüssen (52, 54) des Verstärkers (50) und den Transducer-Anschlüssen (18) des Ultraschall-Transducers (10) ausgebildet sind, wobei die Trenn-Halbleiterschalter (58) beim Versorgen des Ultraschall-Transducers (10) mit der Ansteuerspannung ausgeschaltet und zum Auswerten einer an den Transducer-Anschlüssen (18) des Ultraschall-Transducers (10) anliegenden Auswertespannung eingeschaltet sind.
12. Ultraschall-Messvorrichtung nach 10, dadurch gekennzeichnet, dass die Spannungsbegrenzungselemente (56) jeweils als Source-Follower geschaltete FET-Transistoren (62) oder als Emitter-Folger geschaltete Bipolar-Transistoren ausgebildet sind.
13. Ultraschall-Messvorrichtung nach 10, dadurch gekennzeichnet, dass die Spannungsbegrenzungselemente (56) jeweils als eine Schaltung aus einem in der besagten Verbindungsleitung (46, 48) angeordneten Widerstand (64) und einer diesen mit dem Bezugspotenzial (44) verbindenden Spannungsbegrenzungsdiode (66), insbesondere Zenerdiode, ausgebildet sind.
14. Ultraschall-Messvorrichtung nach 10 bis 13, gekennzeichnet durch eine Dämpfungsschaltung (74), die parallel zu den beiden Eingangsanschlüssen (52, 54) des Verstärkers (50) angeordnet ist und zwei weitere Halbleiterschalter (76) aufweist, mit denen die Dämpfungsschaltung (74) mit jeweils einer der Verbindungsleitungen (46, 48) verbindbar oder von dieser trennbar ist, wobei die beiden weiteren Halbleiterschalter (76) von der Steuereinheit (30) ansteuerbar sind und während der Versorgung des Ultraschall-Transducers (10) mit der Ansteuerspannung ausgeschaltet, danach sowie vor der Auswertung einer an den Transducer-Anschlüssen des Ultraschall-Transducers (10) anliegenden Auswertespannung zwecks Dämpfung des Ausschwingens des Ultraschall-Transducers (10) in der Ausschwingphase eingeschaltet und während der Auswertung einer an den Transducer-Anschlüssen (18) des Ultraschall-Transducers (10) anliegenden Auswertespannung wieder ausgeschaltet sind.
15. Ultraschall-Messvorrichtung nach 14, dadurch gekennzeichnet, dass die Dämpfungsschaltung (74) mindestens einen Widerstand (78) und/oder mindestens eine Induktivität (80) aufweist.
16. Ultraschall-Messvorrichtung nach 10 bis 15, dadurch gekennzeichnet, dass die Steuereinheit (30) die Ansteuer-Halbleiterschalter (28) nach dem Versorgen des Ultraschall-Transducers (10) mit der Ansteuerspannung und vor dem Auswerten einer an den Transducer-Anschlüssen (18) des Ultraschall-Transducers (10) anliegenden Auswertespannung zur Erzeugung von Einzel- oder Doppel- oder Mehrfach-Dämpfungspulsen ansteuert, mit dem oder mit denen der Ultraschall-Transducer (10) zum Dämpfen seines Ausschwingens in der Ausschwingphase phasenverschoben und insbesondere gegenphasig zum Ausschwingen des Ultraschall Transducers (10) beaufschlagbar sind.
17. Ultraschall-Messvorrichtung nach 16, dadurch gekennzeichnet, dass bei Beaufschlagung des Ultraschall-Transducers (10) mit mehreren Dämpfungspulsen deren Energie veränderbar, insbesondere von Dämpfungspuls zu Dämpfungspuls verringerbar ist.
18. Ultraschall-Messwandler nach 10 bis 17, dadurch gekennzeichnet, dass zwischen den beiden Eingangsanschlüssen (52, 54) des Verstärkers (50) eine Arbeitspunkt-Einstellschaltung (68) angeordnet ist, die zwei gleich große Widerstände (70) und zwischen diesen einen Potentialanschluss (72) aufweist, an den das Mittenpotenzial des von dem Verstärker (50) zu verarbeitenden Auswertespannungsbereichs anliegt, der seinerseits zwischen 0 V und einigen wenigen Volt, insbesondere 10 V oder 8 V oder 5 V oder 3,3 V beträgt.

### BEZUGSZEICHENLISTE

- 10: Ultraschall-Transducers
- 12: integrierte Schaltung des Halbleiter-Chip
- 14: Halbleiter-Chip
- 16: IC-Anschluss des Halbleiter-Chip
- 18: Transducer-Anschluss des Ultraschall-Transducers
- 20: Ansteuer- bzw. Hochvoltschaltungsteil
- 22: Auswerte- bzw. Niedervoltschaltungsteil
- 23: Ansteuereinheit des Ansteuer- bzw. Hochvoltschaltungsteils
- 24: Vollbrückenschaltung der Ansteuereinheit
- 26: Halbbrückenschaltung der Vollbrückenschaltung
- 28: Ansteuer-Halbleiterschalter
- 30: Steuereinheit
- 32: Schaltungsknoten
- 34: Ladungspumpenschaltung
- 40: Ladungskondensator
- 42: Anschluss-Pad
- 44: Masse
- 46: Verbindungsleitung
- 46': Anschlussleitung
- 48: Verbindungsleitung
- 48': Anschlussleitung
- 49: Auswerteinheit
- 50: Verstärker
- 52: Eingang des Verstärkers
- 54: Eingang des Verstärkers
- 56: Spannungsbegrenzungselement
- 58: Trenn-Halbleiterschalter
- 60: Anschluss-Pad
- 62: MOSFET-Transistoren
- 64: Widerstand
- 66: Spannungsbegrenzungsdiode
- 68: Schaltung zur Einstellung des Arbeitspunkt des Verstärkers
- 70: Widerstände
- 72: Verbindungsknoten zwischen den Widerständen
- 74: Dämpfungsschaltung
- 76: Halbleiterschalter
- 78: Dämpfungswiderstände
- 80: Dämpfungsspule
- 82: parasitäre Freilaufdioden der Ansteuer-Halbleiterschalter

## Patentansprüche

1. Vorrichtung zur Ansteuerung eines Ultraschall-Transducers und zur Auswertung von von dem Ultraschall-Transducer gelieferten Messsignalen, mit
- einer integrierten Schaltung (12), die zwei nach außen geführte IC-Anschlüsse (16) zur elektrischen Verbindung mit einem Ultraschall-Transducer (10) aufweist,
- wobei an die IC-Anschlüsse (16) der integrierten Schaltung (12) zum Aussenden eines Ultraschall-Burstsignals in einer Ansteuerphase eine alternierend umpolbare Ansteuerspannung angelegt wird und an den IC-Anschlüssen (16) der integrierten Schaltung (12) bei Empfang eines Ultraschall-Echosignals in einer Empfangsphase eine von dem Ultraschall-Transducer ausgegebene Auswertespannung anliegt,
- wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs,
- einer als Bestandteil der integrierten Schaltung (12) ausgebildeten Ansteuereinheit (23) zur Erzeugung der Ansteuerspannung, wobei die Ansteuereinheit (23) mit einer zwischen einem Versorgungspotential (VDD) und einem Bezugspotential (44), insbesondere Masse, angeordneten Vollbrückenschaltung (24) mit zwei jeweils zwei Ansteuer-Halbleiterschalter (28) aufweisende Halbbrückenschaltungen (26) versehen ist, deren beide jeweils zwei Ansteuer-Halbleiterschalter (28) verbindende Schaltungsknoten (32) mit den beiden IC-Anschlüssen (16) der integrierten Schaltung (12) elektrisch verbunden sind,
- einer als Bestandteil der integrierten Schaltung (12) ausgebildeten Auswerteeinheit (49) mit einem Auswertespannungen in dem Niedervoltbereich verarbeitenden Verstärker (50) mit zwei Eingangsanschlüssen (52, 54), die mit den beiden IC-Anschlüssen (16) der integrierten Schaltung (12) elektrisch verbunden sind,
- einem als Bestandteil der integrierten Schaltung (12) ausgebildeten Spannungsbegrenzungselement (56) in jeder elektrischen Verbindung (46', 48') zwischen den Eingangsanschlüssen (52, 54) des Verstärkers (50) und den beiden IC-Anschlüssen (16) der integrierten Schaltung (12), wobei beide Spannungsbegrenzungselemente (56) die an den Eingangsanschlüssen (52, 54) des Verstärkers (50) anliegende Spannung auf einen Wert in dem Niedervoltbereich begrenzen,
- einer als Bestandteil der integrierten Schaltung (12) ausgebildeten Steuereinheit (30) zur Ansteuerung der Ansteuer- Halbleiterschalter (28),
- wobei zum Anlegen der Steuerspannung an die IC-Anschlüsse (16) der integrierten Schaltung von den vier Ansteuer-Halbleiterschaltern (28) wechselweise jeweils zwei Ansteuer-Halbleiterschalter (28) eingeschaltet sowie jeweils zwei Ansteuer-Halbleiterschalter (28) ausgeschaltet sind und
- wobei zum Auswerten einer an den IC-Anschlüssen (16) der integrierten Schaltung (12) anliegenden Auswertespannung die vier Ansteuer-Halbleiterschalter (28) ausgeschaltet sind.

2. Vorrichtung nach Anspruch 1, **dadurch gekennzeichnet, dass** die Spannungsbegrenzungselemente (56) jeweils als ein von der Steuereinheit (30) ansteuerbarer, in einer der elektrischen Verbindungen zwischen den Eingangsanschlüssen (52, 54) des Verstärkers (50) und den IC-Anschlüssen (16) der integrierten Schaltung (12) angeordneter Trenn-Halbleiterschalter (58) zum wahlweisen Trennen und Schließen der elektrischen Verbindungen (46', 48') zwischen den Eingangsanschlüssen (52, 54) des Verstärkers (50) und den IC-Anschlüssen (16) der integrierten Schaltung (12) des Ultraschall-Transducers (10) ausgebildet sind, wobei die Trenn-Halbleiterschalter (58) zum Versorgen der IC-Anschlüsse (16) der integrierten Schaltung (12) mit der Ansteuerspannung ausgeschaltet und zum Auswerten einer an den IC-Anschlüssen (16) der integrierten Schaltung (12) anliegenden Auswertespannung eingeschaltet sind.

3. Vorrichtung nach einem der Ansprüche 1 bis 2, **gekennzeichnet durch** eine als Bestandteil der integrierten Schaltung (12) ausgebildeten Dämpfungsschaltung (74), die parallel zu den beiden Eingangsanschlüssen (52, 54) des Verstärkers (50) angeordnet ist und zwei weitere Halbleiterschalter (76) aufweist, mit denen die Dämpfungsschaltung (74) mit jeweils einer der elektrischen Verbindungen (46', 48') zwischen den Eingangsanschlüssen (52, 54) des Verstärkers (50) und den IC-Anschlüssen (16) der integrierten Schaltung (12) verbindbar oder von dieser trennbar ist, wobei die beiden weiteren Halbleiterschalter (76) von der Steuereinheit (30) ansteuerbar sind und während der Versorgung der IC-Anschlüsse (16) der integrierten Schaltung (12) mit der Ansteuerspannung ausgeschaltet, danach sowie vor der Auswertung einer an den IC-Anschlüssen (16) der integrierten Schaltung (12) anliegenden Auswertespannung zwecks Dämpfung eines Ausschwingens des Ultraschall-Transducers (10) in einer Ausschwingphase eingeschaltet und während der Auswertung einer an den IC-Anschlüssen (16) der integrierten Schaltung (12) anliegenden Auswertespannung wieder ausgeschaltet sind.

4. Vorrichtung nach Anspruch 3, **dadurch gekennzeichnet, dass** die Dämpfungsschaltung (74) mindestens einen Widerstand (78) und/oder mindestens eine Induktivität (80) aufweist.

5. Vorrichtung nach einem der Ansprüche 1 bis 4, **dadurch gekennzeichnet, dass** die Steuereinheit (30) die Ansteuer-Halbleiterschalter (28) nach dem Versorgen der IC-Anschlüsse (16) der integrierten Schaltung (12) mit der Ansteuerspannung und vor dem Auswerten einer an den IC-Anschlüssen (16) der integrierten Schaltung (12) anliegenden Auswertespannung zur Erzeugung von Einzel- oder Doppel- oder Mehrfach-Dämpfungspulsen ansteuert, mit dem oder mit denen der Ultraschall-Transducer (10) zum Dämpfen eines Ausschwingens in einer Ausschwingphase phasenverschoben und insbesondere gegenphasig zum Ausschwingen des Ultraschall-Transducers (10) beaufschlagbar sind.

6. Vorrichtung nach Anspruch 5, **dadurch gekennzeichnet, dass** bei Beaufschlagung der IC-Anschlüsse (16) der integrierten Schaltung (12) mit mehreren Dämpfungspulsen deren Energie veränderbar, insbesondere von Dämpfungspuls zu Dämpfungspuls verringerbar ist.

7. Vorrichtung nach einem der Ansprüche 1 bis 5, **dadurch gekennzeichnet, dass** zwischen den beiden Eingangsanschlüssen (52, 54) des Verstärkers (50) eine Arbeitspunkt-Einstellschaltung (68) angeordnet ist, die zwei gleich große Widerstände (70) und zwischen diesen einen Potentialanschluss (72) aufweist, an den das Mittenpotenzial des von dem Verstärker (50) zu verarbeitenden Auswertespannungsbereichs anliegt, der seinerseits zwischen 0 V und einigen wenigen Volt, insbesondere 10 V oder 8 V oder 5 V oder 3,3 V beträgt.

8. Ultraschall-Messvorrichtung mit
- einem spannungsumsetzerfreien ansteuerbaren Ultraschall-Transducer (10), der zwei Transducer-Anschlüsse (18) aufweist, an die zum Aussenden eines Ultraschall-Burstsignals in einer Ansteuerphase eine alternierend umpolbare Ansteuerspannung anlegbar ist und an denen bei Empfang eines Ultraschall-Echosignals in einer Empfangsphase eine Auswertespannung anliegt, wobei der Ultraschall-Transducer (10) in einer Ausschwingphase zwischen einer Ansteuerphase und einer Empfangsphase ausschwingt,
- wobei die Auswertespannung im Niedervoltbereich von mehr als 0 V und bis zu einigen wenigen Volt, insbesondere bis zu 10 V oder bis zu 8 V oder bis zu 5 V oder bis zu 3,3 V oder bis zu 1,8 V liegt und die Ansteuerspannung im Hochvoltbereich liegt, der Spannungen umfasst, die um bis zu zwei Zehnerpotenzen größer sind als die des Niedervoltbereichs, und
- einer integrierten Schaltung (12), die zwei nach außen geführte IC-Anschlüsse (16) aufweist, die mit den beiden Transducer-Anschlüssen (18) des Ultraschall-Transducers (10) verbunden sind,
- wobei die integrierte Schaltung versehen ist mit
- einer Ansteuereinheit (23) zur Erzeugung der Ansteuerspannung, wobei die Ansteuereinheit (23) mit einer zwischen einem Versorgungspotential (VDD) und einem Bezugspotential (44), insbesondere Masse, angeordneten Vollbrückenschaltung (24) mit zwei jeweils zwei Ansteuer-Halbleiterschalter (28) aufweisende Halbbrückenschaltungen (26) versehen ist, deren beide jeweils zwei Ansteuer-Halbleiterschalter (28) verbindende Schaltungsknoten (32) über jeweils eine Verbindungsleitung (46, 48) mit den beiden nach außen geführten IC-Anschlüssen (16) verbunden sind,
- einer Auswerteeinheit (49) mit einem Auswertespannungen in dem Niedervoltbereich verarbeitenden Verstärker (50) mit zwei Eingangsanschlüssen (52, 54), die über Anschlussleitungen (46', 48') elektrisch mit den beiden Schaltungsknoten (32) der Halbbrückenschaltung (26) der Ansteuereinheit (23) verbunden sind,
- einem Spannungsbegrenzungselement (56) in jeder Anschlussleitung (46', 48') wobei beide Spannungsbegrenzungselemente (56) die an den Eingangsanschlüssen (52, 54) des Verstärkers (50) anliegende Spannung auf einen Wert in dem Niedervoltbereich begrenzen,
- einer Steuereinheit (30) zur Ansteuerung der Ansteuer-Halbleiterschalter (28),
- wobei zum Versorgen des Ultraschall-Transducers (10) mit der Ansteuerspannung zwecks Aussendens eines Ultraschall-Burstsignals von den vier Ansteuer-Halbleiterschaltern (28) wechselweise jeweils zwei Ansteuer-Halbleiterschalter (28) eingeschaltet sowie zwei Ansteuer-Halbleiterschalter (28) ausgeschaltet sind und
- wobei zum Auswerten einer an den Transducer-Anschlüssen (18) des Ultraschall-Transducers (10) anliegenden Auswertespannung die vier Ansteuer-Halbleiterschalter (28) ausgeschaltet sind.

9. Ultraschall-Messvorrichtung nach Anspruch 8, **dadurch gekennzeichnet, dass** die Spannungsbegrenzungselemente (56) jeweils als ein von der Steuereinheit (30) ansteuerbarer, in einer der Verbindungsleitungen (46, 48) angeordneter Trenn-Halbleiterschalter (58) zum wahlweisen Trennen und Schließen der elektrischen Verbindungsleitungen (46, 48) zwischen den Eingangsanschlüssen (52, 54) des Verstärkers (50) und den Transducer-Anschlüssen (18) des Ultraschall-Transducers (10) ausgebildet sind, wobei die Trenn-Halbleiterschalter (58) beim Versorgen des Ultraschall-Transducers (10) mit der Ansteuerspannung ausgeschaltet und zum Auswerten einer an den Transducer-Anschlüssen (18) des Ultraschall-Transducers (10) anliegenden Auswertespannung eingeschaltet sind.

10. Ultraschall-Messvorrichtung nach einem der Ansprüche 8 bis 9, **gekennzeichnet durch** eine Dämpfungsschaltung (74), die parallel zu den beiden Eingangsanschlüssen (52, 54) des Verstärkers (50) angeordnet ist und zwei weitere Halbleiterschalter (76) aufweist, mit denen die Dämpfungsschaltung (74) mit jeweils einer der Verbindungsleitungen (46, 48) verbindbar oder von dieser trennbar ist, wobei die beiden weiteren Halbleiterschalter (76) von der Steuereinheit (30) ansteuerbar sind und während der Versorgung des Ultraschall-Transducers (10) mit der Ansteuerspannung ausgeschaltet, danach sowie vor der Auswertung einer an den Transducer-Anschlüssen des Ultraschall-Transducers (10) anliegenden Auswertespannung zwecks Dämpfung des Ausschwingens des Ultraschall-Transducers (10) in der Ausschwingphase eingeschaltet und während der Auswertung einer an den Transducer-Anschlüssen (18) des Ultraschall-Transducers (10) anliegenden Auswertespannung wieder ausgeschaltet sind.

11. Ultraschall-Messvorrichtung nach Anspruch 10, **dadurch gekennzeichnet, dass** die Dämpfungsschaltung (74) mindestens einen Widerstand (78) und/oder mindestens eine Induktivität (80) aufweist.

12. Ultraschall-Messvorrichtung nach einem der Ansprüche 8 bis 11, **dadurch gekennzeichnet, dass** die Steuereinheit (30) die Ansteuer-Halbleiterschalter (28) nach dem Versorgen des Ultraschall-Transducers (10) mit der Ansteuerspannung und vor dem Auswerten einer an den Transducer-Anschlüssen (18) des Ultraschall-Transducers (10) anliegenden Auswertespannung zur Erzeugung von Einzel- oder Doppel- oder Mehrfach-Dämpfungspulsen ansteuert, mit dem oder mit denen der Ultraschall-Transducer (10) zum Dämpfen seines Ausschwingens in der Ausschwingphase phasenverschoben und insbesondere gegenphasig zum Ausschwingen des Ultraschall Transducers (10) beaufschlagbar sind.

13. Ultraschall-Messvorrichtung nach Anspruch 12, **dadurch gekennzeichnet, dass** bei Beaufschlagung des Ultraschall-Transducers (10) mit mehreren Dämpfungspulsen deren Energie veränderbar, insbesondere von Dämpfungspuls zu Dämpfungspuls verringerbar ist.

14. Ultraschall-Messvorrichtung nach einem der Ansprüche 8 bis 13, **dadurch gekennzeichnet, dass** zwischen den beiden Eingangsanschlüssen (52, 54) des Verstärkers (50) eine Arbeitspunkt-Einstellschaltung (68) angeordnet ist, die zwei gleich große Widerstände (70) und zwischen diesen einen Potentialanschluss (72) aufweist, an den das Mittenpotenzial des von dem Verstärker (50) zu verarbeitenden Auswertespannungsbereichs anliegt, der seinerseits zwischen 0 V und einigen wenigen Volt, insbesondere 10 V oder 8 V oder 5 V oder 3,3 V beträgt.
